# EUROPEAN PATENT APPLICATION

(11) **EP 3 599 688 A1**
(43) Date of publication of application: **29.01.2020**
(21) Application number: 19187611.9
(22) Date of filing: 22.07.2019
(51) Int. Cl.: H02G 3/14, H02G 3/12, H02G 3/18, H02G 3/20

(54) **MOUNTING SYSTEM FOR ELECTRICAL DEVICES**

(30) Priority: 24.07.2018 BE 201805532
(71) Applicant: Niko NV, 9100 Sint-Niklaas (BE)
(72) Inventor: COOREMAN, Tom, 9310 Meldert (Aalst) (BE); VERHEULE, Gert, 2620 Hemiksem (BE)
(74) Representative: DenK iP

(57) **Abstract**

A Mounting plate (200, 210) and a mounting frame (300, 310) are provided. These allow providing an easy attachment of an electrical device (100) to a wall or ceiling without using tools such as screws or the like, and which allows easy interchange, which also can be applied to mounting boxes (400) which follow different standards. The mounting plate (200, 210) includes an aperture (201) for receiving at least part of the device, and attachment means (202, 203, 212) for attaching the mounting plate (200, 210) to a mounting box (300, 310), and at least one clamping hook (600, 610, 620) with an elongated arm (602, 612, 622) for fixing the position of a mounting of the electrical device (100). The clamping hook (600, 610, 620) can engage with a cavity or slot (302, 313) of the frame (300, 310) by inserting the hook (600, 610, 620) in the slot (302, 313) of the frame (300, 310) and rotating or shifting the frame (300, 310) so the arm of the hook (600, 610, 620) slides over the frame (300, 310). The mounting frame (300, 310) includes at least one receiving portion (302, 313) adapted to fit at least one clamping hook (600, 610, 620) of the mounting plate (200, 210). An installation system including both the mounting frame (300, 310) and the mounting plate (200, 210) and method of manufacture the mounting plate are provided.

## Description

### Field of the invention

The present invention relates to the field of electrical installations. More specifically it relates to a mounting system for electrical devices, such as sensors, detectors or the like, and methods of manufacture thereof.

### Background of the invention

For many electrical devices such as, for example, sensors for e.g. temperature, daylight or motion detection, controllers, actuators, lighting means, speakers or the like, the ideal place for installing may usually be the ceiling. For installing them, these devices usually need to be connected to the electric network of a building in order to be powered up, and/or to interchange data via wires.

Usually, part of the electrical device (for example, the hardware or electronics of a sensor) is introduced in an electrical mounting box where the connection with the external outputs, such as power and transmission data wires, takes place. The mounting box itself is a container made of resilient and electrically insulating material such as plastics. The mounting box may be securely attached to a wall, or inside the wall as in the case of, for example, flush boxes.

Typically, the installation requires fixing the electrical device to a wall in a secure way, which requires attaching somehow (e.g. screwing) the electrical device to the wall or to the electrical mounting box in the wall. This is time consuming and cumbersome, and requires skill and care, especially when installing the electrical device in places difficult to reach such as high up a wall or at a ceiling. Thus, installation and de-installation may in many cases be difficult. Moreover, fixing the electrical device directly to the wall or ceiling requires providing holes big enough to fit the electrical device, or removing portions of the wall or ceiling.

A common solution to avoid perforating the wall or ceiling, is attaching the electrical device to an electrical mounting box, but this requires adapting the electrical device to that particular electrical mounting box, such mounting boxes following strict standards. Moreover, some electrical devices need to comply with geometric and size requirements which are not compatible with electrical mounting boxes.

EP2622696 discloses an electrical device including a bezel that can be screwed to a hollow clamp piece inserted in a wall or ceiling, so no flush or mounting box is used. The installation of the device is made easier; however, the installation of the hollow clamp piece per se is complex, the lack of electrical mounting boxes may present a safety and/or regulatory issue, and this solution requires enough room for the hollow clamp piece. Moreover, this solution cannot be applied to all types of walls or ceilings, but mainly in panel walls, double walls, panel ceilings and the like.

DE3202241A1 discloses a mounting plate for receiving a switch where the plate includes hooks with slopes for fixing the switch to the plate. The relative slopes of the hooks give flexibility in designing plates which can provide different strengths to mounting and dismantling the switch and plate. Snapping action in a short hook may damage easily the frame where the switch is assembled.

DE7728676U1 discloses a mounting plate with aperture and attachment means with clamps, which may slide over the frame of an electric device like a brightness adjuster. The housing must absorb strong forces transmitted to the support member in a simple way by providing rigid locking with the housing. Locking tongues can engage with recesses of the housing. However, dismantling the device is not easily provided.

DE3743191A1 provides frictional connection between a support ring and a device. A bayonet lock is provided for the cases of axial attachment, where the support ring is a flat disc with protruding retaining tabs for engaging with support gaps in a cylindrical device.

US2014090509A1 shows an alternative press-button type of engagement, where a stud can be pressed against retaining means for attachment. The stud does not need to be elastic. However, disassembly is not easily provided.

DE102008045004A1 discloses an electrical flush installation device including a support plate and cover. The support plate includes latching hooks at the free ends of spring arms, with inclined surfaces for centering and sliding. The cover frame can be placed on the support plate and pressed, so the arms of the hooks engage with corresponding ribs on the cover. The spring arms are deflected and moved inward due to the pressure, and after a predetermined displacement, the sliding surfaces of the hooks contact the corresponding surfaces of the ribs, relaxing the spring arms and pressing the cover frame, due to the spring force of the arms, against the support plate.

### Summary of the invention

It is an object of embodiments of the present invention to provide a mounting plate, a mounting frame, an installation system for electrical devices and a method to provide mounting plates, which allow providing an easy attachment of the electrical device to a wall or ceiling without using tools such as screws or the like, and which allows easy interchange. It is an advantage of the present invention that it can be applied to mounting boxes which follow different standards.

In a first aspect, the present invention provides a mounting system including a mounting plate and a mounting frame for mounting an electrical device. The mounting plate comprises an aperture for receiving at least part of an electrical device, and attachment means for attaching the mounting plate to a mounting box. The mounting plate comprises at least one clamping hook with an elongated arm for fixing the position of a mounting frame of the electrical device. The mounting frame has a receiving portion adapted to receive and fit the at least one clamping hook, so the plate and frame can engage with each other.

The elongated arm protrudes from the mounting plate and is connected thereto at a proximal portion. The at least one clamping hook can engage with a receiving portion of the mounting frame, by aligning and inserting the at least one clamping hook into a receiving portion (e.g. a hole, slot or cavity) of the mounting frame, and then rotating or shifting the mounting frame so the elongated arm slides over the mounting frame and contact is provided between the at least one clamping hook and the frame.

The elongated arm can provide a holding force for holding the mounting frame when the clamping hook engages with the receiving portion of the mounting frame.

It is an advantage of embodiments of the present invention that an electrical device, e.g. a lighting device, a sensor such as temperature, daylight or motion sensor (e.g. a PIR), a controller, an actuator, a speaker or the like can easily and in a reliable manner be installed by snapping it in place, with no need for screws or the like. It is a further advantage that a quick fixture can be provided on areas of a wall difficult to reach, or on ceilings. The rotational or lateral shifting motion for attaching the mounting frame to the mounting plate makes the installer's task easier.

In some embodiments, the at least one clamping hook is provided on the external edge of the plate. This allows providing enough space on the plate for other elements, such as screw holes or the like, for fixing to a mounting box or wall. It allows also to leave the aperture totally unobstructed, so a wide range of electrical device sizes can be received through the aperture and can be installed in the box. Additionally, there is a flexibility of design, which allows several types and sizes of devices to be used, so the plate can act as a conversion ring for several devices which can be used with a frame, if the frame does not follow the standards of the mounting box.

In some embodiments of the present invention, the mounting plate is made of metal.

It is an advantage of embodiments of the present invention that resilience of the mounting plate is increased.

In some embodiments of the present invention, the elongated arm comprises an anchoring feature and the frame comprises an anchorage feature, both features being adapted to cooperate and clip upon engagement of the frame and plate for fixing their relative position; For example, the elongated arm includes a dimple, stud or tooth in a distal portion opposite to its proximal portion. The dimple, stud or tooth are adapted for clipping into a protrusion or ridge of the frame, for anchoring and fixing the position of the mounting frame with respect to the mounting plate.

In some embodiments of the present invention, the elongated arm of the at least one clamping hook is adapted for providing elastic action. The arm and dimple are adapted to provide a force in a direction substantially parallel to the mounting plate, for pushing against a protrusion of a mounting frame, thereby fixing the position of the mounting frame. In some embodiments, the arm and dimple are adapted to provide an outward force substantially parallel to the mounting plate, for example the force may be directed outwards with respect to the center of the aperture. In some embodiments, the arm and dimple are adapted to provide a radially outward force substantially parallel to the mounting plate.

It is an advantage of embodiments of the present invention that sufficient elasticity of the hooks is obtained, for providing spring clamping. It is an advantage of embodiments of the present invention that sufficient strength of fixture is obtained without compressing or deforming the protrusions of the mounting frame, allowing multiple installations and de-installations.

In some embodiments of the present invention, the arm and the dimple, stud or tooth are adapted to provide a force towards the mounting plate, by clipping into a cavity of the mounting frame thereby fixing the position of the mounting frame ("biting" the frame). In some embodiments of the present invention, the shape of the arm and its protrusion may conform the cavity of the mounting frame.

It is an advantage of embodiments of the present invention that sufficient strength of fixture is obtained by clamping compression, and the strength can be easily varied by varying the size of the dimple or tooth. It is a further advantage that the shape of the arm is easy to provide, e.g. by cutting, and provides good and resilient anchorage.

In some embodiments of the present invention, the attachment means comprises a keyhole shaped orifice comprising a hole for fitting the head of a screw, and an extension slot for fitting the body of the screw, the extension slot having a dimension smaller than the hole.

It is an advantage of embodiments of the present invention that sufficient strength of fixture is obtained by clamping compression, and the strength can be easily varied by varying the size of the dimple or tooth. In some cases, such as for example in case of banana holes, the keyhole shaped orifices allow rotational motion for attaching the mounting frame to the mounting plate, which makes the installer's task easier.

In some embodiments of the present invention, the mounting plate comprises a plurality of clamping hooks distributed along the plate at 79 mm of the center of the aperture.

It is an advantage of embodiments of the present invention that a universal fixture system for an electrical device can be provided, which can be installed in most standard mounting boxes.

In a second aspect, the present invention relates to a mounting frame for an electrical device, the mounting frame including at least one receiving portion being adapted to fit at least one clamping hook of a mounting plate in accordance with embodiments of the first aspect of the present invention. Thus, the receiving portion is adapted to engage with a clamping hook by aligning the hook and receiving portion, inserting the hook and sliding the elongated arm of the hook into the frame, for providing contact or abutting the clamping hook against the frame, so as to fix the frame relative to the plate.

It is an advantage of embodiments of the present invention that an electrical device can be fixed to a mounting box of all or most standards.

In some embodiments, the mounting frame further includes protrusions, and/or cavities and/or ridges for engaging with the at least one clamping hook of a mounting plate of embodiments of the first aspect of the present invention.

It is an advantage of embodiments of the present invention that an electrical device can be fixed to a mounting box of all or most standards.

In a third aspect, the present invention provides a mounting system comprising a mounting plate in accordance with embodiments of the first aspect, and further comprising a mounting frame in accordance with embodiments of the second aspect of the present invention.

In a fourth aspect, the present invention provides a method of providing a mounting plate. The method comprises:
- shaping a plate,
- providing an aperture through the plate for receiving a housing of an electrical device,
- providing attachment means for attaching the plate to a mounting box,
- forming at least one clamping hook with elongated arm on the plate.

The mounting plate may be the mounting plate of embodiments of the first aspect. Thus, providing the mounting plate further comprises at least forming the elongated arm protruding from the plate and connected thereto in a proximal portion, so the at least one clamping hook can engage with a receiving portion of a mounting frame (by aligning and inserting the at least one clamping hook into a receiving portion of the mounting frame, and rotating or shifting (e.g. laterally shifting) the mounting frame so the elongated arm can slide over and abut or contact the mounting frame). Forming the elongated arm comprises forming an elongated arm adapted for providing a holding force for holding the mounting frame when the clamping hook engages with the receiving portion of the mounting frame.

In some embodiments of the present invention, the method also comprises forming a dimple, stud or tooth in the distal portion of the arm (opposite to its proximal portion). It is adapted for clipping into a protrusion or ridge of the mounting frame, so the position of the mounting frame with respect to the mounting plate can be fixed upon engagement of the hook and the receiving portion of the mounting frame.

It is an advantage of embodiments of the present invention that a mounting plate can be obtained, with means for attaching the plate to a wall box or the like and also with means of attaching it to an electrical device easily by snapping it in place, with no need of tools, and in a reliable manner. The obtained plate can be fixed quickly on areas difficult to reach.

In embodiments of the present invention, forming the at least one clamping hook comprises folding predetermined portions of the shaped plate. For example, the external edges of the shaped plate can be folded.

It is an advantage of embodiments of the present invention that an easy way of shaping the plate and forming and shaping the clamping hooks can be obtained. When folding is done at the edges, a plate can be obtained with versatile uses, as it allows different positionings of other fixing elements (for fixing the plate against e.g. a mounting box) and does not partially block the central aperture of the shaped plate, allowing a wide range of electrical devices to be used with the plate.

In embodiments of the present invention, the method further comprises bending the hooks to a predetermined angle with respect to the plate surface.

It is an advantage of embodiments of the present invention that strength of clamping action can be tailored.

In embodiments of the present invention, shaping a plate comprises shaping a metal plate. It is an advantage of embodiments of the present invention that a resilient mounting plate can be obtained.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 is an exploded perspective view of an electrical device and mounting system in accordance with embodiments of the present invention.
FIG 2 is a top view of a mounting plate in accordance with embodiments of the present invention, and a zoomed portion thereof.
FIG 3 is a top view of a clamping hook of a mounting plate in accordance with embodiments of the present invention.
FIG 4 is a side view of the clamping hook of FIG 3.
FIG 5 is a perspective view of a clamping hook of a mounting plate in accordance with alternative embodiments of the present invention.
FIG 6 is a side view of the clamping hook of FIG 5 and its interaction with a mounting frame.
FIG 7 is a perspective view of a mounting plate and a zoomed clamping hook, in accordance with alternative embodiments of the present invention.
FIG 8 is a side view of the clamping hook shown in FIG 7 and its interaction with a mounting frame.
FIG 9 is a perspective view and a detail of a mounting frame in accordance with embodiments of the present invention.
FIG 10 and FIG 11 illustrate a mounting system, showing the engaging interaction between a mounting plate and mounting frame, in accordance with embodiments of the present invention.
FIG 12 is a flowchart of the manufacture of a mounting plate in accordance with embodiments of the present invention.
FIG 13 illustrates a mounting plate including dimensions, in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to mounting box, reference is made to any of a wall or cavity box, flush box, plasterboard box, electrical box or any other container for electric fitting, which can be attached to, or embedded in, a wall or ceiling, for routing cables. A mounting box can be used for routing data wires, electric wires and the like, and for connecting these to an electrical device, etc., and also for protecting the electric components of the device and the wires.

The present invention provides a mounting system for an electrical device, i.e. a system and parts thereof which make installing and uninstalling of such electrical devices available for any user, such as an end user, without requiring expertise, skills, or many or uncommon tools. The invention includes a mounting frame, for holding the electrical device. In some cases, the frame can be attached directly to a mounting box if the size of the mounting box and distribution of screw holes amongst the circumference of the mounting box is suitable. The present invention further includes a mounting plate to which the frame can also be attached. This mounting plate acts as a universal conversion bridge or ring, and it serves as a physical connection piece between the mounting box and the mounting frame, so an electrical device including such frame can still be installed and removed in the same easy and simple way, regardless of the type of mounting box that is used. The plate includes hooks with elongated arms for easy and secure attachment to a frame. The present invention includes a device system including the plate and the frame.

The present invention also provides a method of manufacturing the mounting plate.

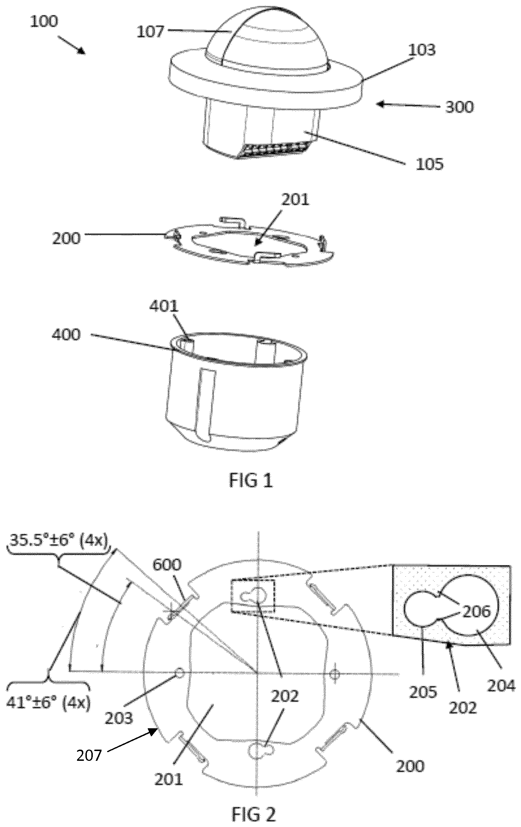

FIG 1 shows an exploded view of an electrical device 100, in this case including a sensor, with a mounting system 200, 300 comprising a mounting plate 200 and a mounting frame 300 (covered by a frame cover 103), and with a mounting box 400. The electrical device may comprise a device housing 105 for housing e.g. electrical device electronics. The mounting plate 200 has, in the example given, the shape of a ring, with an aperture 201, such as a central hole, for fitting at least part of the device housing 105.

The electrical device 100 may comprise lighting devices, such as lamps, commissioning lights or emergency lights, sensors, detectors, controllers, actuators, speakers or the like. For example, in FIG 1 is shown a PIR sensor, but it may be any other sensor such as a presence or motion sensor, ultrasound sensor, etc., and the aperture 201 of the plate 200 should be able to fit the electronics or housing 105. For example, the aperture 201 may include four rims for fitting a housing 105 with corresponding shape; the rims may have a slight curvature to contact and even provide static friction, serving as holding means for the housing 105, preferably without damaging or deforming it.

It has to be noted that the present invention is not limited by the particular shape of the mounting plate 200 as described above, and that it may be any suitable shape such as for example a circular ring, a square ring, an open ring, etc.

The mounting frame 300 may also be ring-shaped, and it may be adapted to fit and engage with the mounting plate 200, as will be explained below. The mounting frame 300 may be adapted to harbor and hold the electrical device 100. A frame cover 103 may cover the mounting frame 300.

The mounting frame 300 and the mounting plate 200 can be attached to each other, including engaging means as will be explained with reference to the remainder of the figures.

A mounting box 400 is also shown, for example a plasterboard box, but any suitable box can be used, e.g. a wall box following the European standard. The mounting plate 200 has attachment means such as screw holes for attaching (e.g. screwing) the mounting plate 200 to the mounting box 400. Several attachment means may be distributed so that the mounting plate 200 can be attached to mounting boxes in accordance with different, even most or all, standards.

The mounting plate 200, once connected, e.g. screwed, to the mounting box 400, can join the mounting frame 300 with the mounting box 400, so different standards for mounting boxes across different countries and regions can still be used even if the mounting frame 300 cannot be directly attached to these mounting boxes 400, e.g. because the minimum size requirements of certain devices (such as the PIR sensor of the figure) impede this direct attachment. In such cases, as already described above, the mounting plate 200 may act as a universal conversion bridge or ring, thereby providing a physical connection between the mounting box 400 and the mounting frame 300, so an electrical device including such frame 300 can still be installed and removed in the same easy and simple way, regardless of the type of mounting box 400 that is used.

In a first aspect, the present invention relates to a mounting plate 200, for example but not limited to a ring-like plate, with a hole or aperture 201 at its center, in which can fit an electrical device. The functional device may, for example, be a ceiling or wall device, such as, for example, sensors for e.g. temperature, daylight or motion detection, controllers, actuators, lighting means, speakers or the like.

The mounting plate 200 of the present invention allows removably fixing an electrical device 100 to the mounting plate 200 with no need of tools, and which provides easy installation and de-installation. This is obtained by one or more clamping hooks that are provided on the mounting plate 200, which can engage with cavities or holes in a mounting frame 300 of the electric device 100. The one or more clamping hooks are adapted to removably fix the mounting frame 300 to the mounting plate 200.

The present invention is advantageous in the case of electrical devices that are only provided temporarily, such as commissioning lights (which are used only during building, before the final installation), devices including batteries, such as for instance smoke detectors, or electrical devices such as e.g. lighting devices, sensors or detectors, that need to be replaced now and then because of a limited life cycle, the present invention not being limited to these examples.

As explained earlier, some electrical devices need to meet installation requirements, (fixed minimum dimensions, shapes), limiting installation possibilities, requiring complex installations, with the result of risk of damages to the electrical devices or the surface of the wall or ceiling, and expensive expertise during installation and during any maintenance or replacement.

The mounting plate 200 of the present invention ensures attachment of any electrical device, even if some parts of the electrical device require wider area than the area covered by the distribution of the anchors (screw holes) of the mounting box.

The use of these mounting plates 200 in accordance with embodiments of the present invention can be especially advantageous for installing presence detectors and sensors. In the example of IR sensors, different sensing ranges can be provided, for which different lens geometries are required. A 10 m PIR lens could be directly attached to a European standard mounting box, but a 24 m PIR lens requires a diameter which overlaps with the mounting box screw holes. An example of such PIR sensor, comprising a lens 107 with range of 24 m, is shown in FIG 1. The wide lens 107 cannot be directly attached to the mounting box 400, because the diameter of the lens overlaps the screw holes of many standard mounting boxes, e.g. plasterboard mounting box, which usually include screw holes separated by 60 mm. This is narrower than the diameter required by a 24 m PIR lens. However, the mounting plate 200 of the present invention allows using these standard mounting boxes with wide lenses. Moreover, the installation is made easy. It is noted that it can also be used with the 10 m PIR lens, and it still gives the advantage of easy installation.

The mounting plate 200 includes means for attaching to a mounting box, e.g. screw holes. In some embodiments, the mounting plate 200 may include attachment means adapted for an easy installation.

FIG 2 shows a top view of the mounting plate 200, where the attachment means 202, 203 are shown, in the present example four screw holes, which may be distributed amongst the circumference of the mounting plate 200 for coinciding with attaching features 401 (e.g. panel screw holes) of the mounting box 400. Some of the attachment means 202, for example two opposing orifices or screw holes, may be adapted for temporarily holding the mounting plate 200 against a mounting box before long-term fixation (e.g. before fastening screws). This way, while fixing the mounting plate 200, there is no need to hold it firmly in position, as the attachment means already performs that function. For example, the head of a screw, the screw being partially attached to the mounting box and exposing part of its body, may be inserted through a head hole 204, and then the mounting plate 200 can be moved, shifted or rotated so the body of the screw engages with and fits a slot 205 extending from the head hole 204. The mounting plate 200 is, in that way, temporarily held in place, and subsequently the screws can be fastened, thus fixing the position of the mounting plate 200 to the mounting box 400. In order to uninstall the mounting plate 200, the screws need to be loosened, rather than completely removed, and the mounting plate 200 may then be moved or rotated, aligning the screw head with the head hole, and allowing mounting plate removal. The orifices may be for example banana-shaped, keyhole- or peanut-shaped screw holes as shown in the zoomed part of FIG 2, comprising two teeth 206 for holding the screw body, between the head hole 204 and the extension slot 205.

In some embodiments, the size or nature of the electrical device 100 requires a device housing 105 which does not allow a large distance to the attaching features 401 of the mounting box 400 to be engaged together with the attaching means 202, 203 of the mounting plate 200. In other words, the shape and size of the housing 105 requires a wide aperture in the mounting plate 200, so there is not too much room for attaching means 202, 203. The attaching means 202, 203 of the mounting plate 200 need to be positioned near the inner rim of the mounting plate 200, for example at 1 mm of the inner rim. It may happen that in some embodiments, due to the size of the device housing 105 for example, the amount of material between the aperture 201 and the screw hole is very small, and in some cases, it can be easily deformed or even broken during attachment operation, for example due to the pressure of a screw. The mounting plate 200 may comprise, for example it may be made of, a resilient material which does not easily deform under pressure and presents high resistance to tearing. For example, the mounting plate 200 may be a metal plate, for example an alloy, comprising any or all of iron, aluminum, chrome, copper, nickel, etc. For example, it may be a galvanized metal, i.e. it may be pre-galvanized or it may be galvanized after cutting. Preferably, the mounting plate 200 may be an aluminum plate. However, the present invention is not limited to metal plates, and they may also include or be made of plastic, for example including reinforced plastic, e.g. fibre-reinforced plastic. This can be applied to the particular case the aperture 201 and position of the attachment means (screw holes) leave enough material in between, there are less chances of tearing the hole, so the plate 200 may be made of a lighter and softer material than metal.

FIG 2 also shows four hooks 600 for clamping the mounting plate 200 to a mounting frame 300. However, one, two, three or more than four hooks 600 may be provided. They may be distributed in any suitable way. Symmetrical distribution is preferable for homogeneous distribution of the forces that hold the pieces in place, but the present invention is not limited thereto, for example a single clamping hook 600 may be provided, in combination with a vertical tooth or rib on the opposite side of the mounting plate 200. In such case the clamping hook 600 provides fixture (e.g. by snapping or clicking action, as explained below), while the rib or tooth can be used for centering and/or hold the mounting plate 200 into place during installation. For example, the hooks 600 can be distributed along the external rim or edge 207 of the plate 200. This way, there is more freedom to place the attachment means 202, 203 where they may be required. Further, that position allows keeping the aperture 201 of the plate 200 free, which increases the flexibility of choice of design and sizes of electrical devices 100 and housings 105 to be used with the mounting system. Further, it allows to use frames where the receiving portions for receiving the hooks are placed farther towards the external rim of the frame, thus allowing more space for the electrical device and/or housing.

The hooks 600 may include elongated arms with a proximal portion protruding from the mounting plate 200, and a distal portion, including anchoring features such as dimples, slits, studs, teeth, or even grooves or the like for contacting the mounting frame 300 to be attached, for example for anchoring or clipping on anchorage features of the frame. The elongated arms may serve as resting arms for a mounting frame 300. A diametric line can be defined between the center of the mounting plate 200 and the attachment means 203. In some embodiments, the angle at the center of the mounting plate 200 between the center of a hook 600 and the diametric line may be for example 41° (±6°), and 35.5° (±6°) between the contact zone of the hook 600 and the same diametric line, which allows fitting to a mounting frame with the same locations of the features (e.g. slots) of the mounting frame. However, other angles or even an asymmetrical distribution can be used. The elongated arms may have a length between 8 mm and 30 mm.

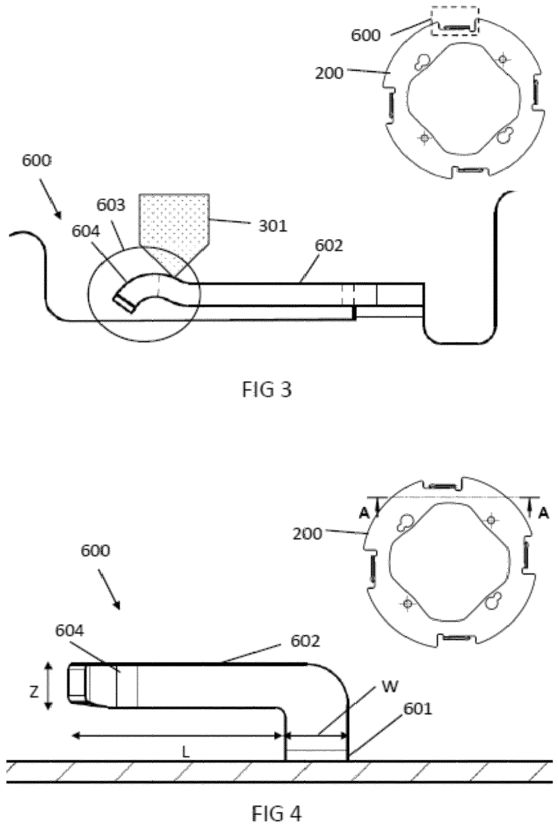

FIG 3 and FIG 4 show a top view and lateral view, respectively, of one of the hooks 600 of the mounting plate 200 of FIG 2.

In particular, a detail of the mounting plate 200 is zoomed and shown in greater detail in the lower drawing of FIG 3, showing further the engagement between the hook 600 and a protrusion 301 of a mounting frame. The hook 600 includes a proximal portion 601 which projects vertically from the plane of the mounting plate 200 (shown in FIG 4), and extends horizontally forming an arm 602. The arm 602 may be a strip with substantially the same thickness as the rest of the mounting plate 200. For example, the arm 602 may be obtained by cutting and shaping the mounting plate 200 and bending or folding it; the strip which forms the arm 602 may be substantially parallel to the normal of the mounting plate 200. The same distribution can be applied to plates including hooks in accordance to embodiments of the present invention. However, the present invention is not limited by a 90° projection, as will be explained below.

FIG 3 shows that the distal portion 603 of the arm may include anchoring features, such as a dimple 604 for contacting a mounting frame 300, and for engaging with frame anchorage features, such as a protrusion 301 (e.g. a protrusion extending vertically with respect to the plane of the mounting plate 200) provided in the mounting frame 300. The dimple 604 may be a rounded dimple, which allows removably clamping the mounting frame 300 to the mounting plate 200 with low risk or no risk of damaging either of them, especially where the protrusion 301 is softer than the dimple 604 (such as in the case of a plastics frame and a metal plate).

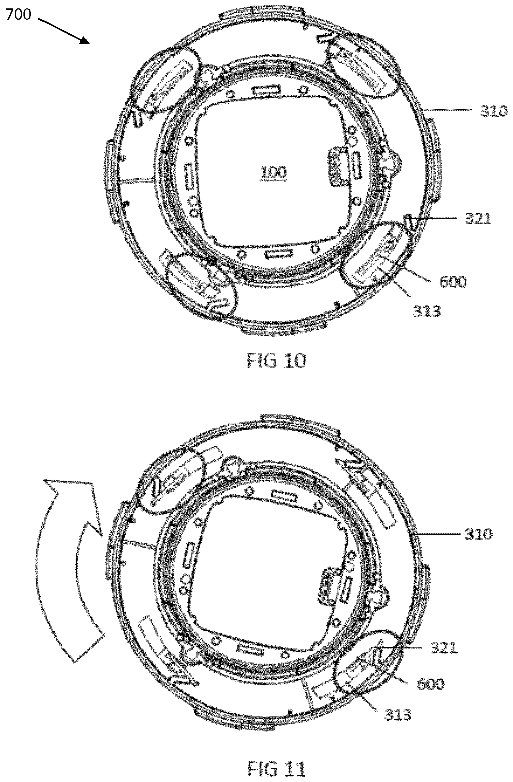

In this particular example, the dimple 604 holds against a vertical protrusion 301 of the frame. The hook 600 abuts the frame 300, so the elastic arm 602 provides a force, for example spring tension, in a direction parallel or substantially parallel to the plane of the mounting plate 200. This force (e.g. tension), combined with the anchoring of the dimple 604 against the protrusion 301 of the mounting frame 300, fixes the mounting plate 200 to the mounting frame 300. The force may be applied outwards, towards a protrusion 301 of the mounting frame 300, e.g. positioned near the outer rim of the mounting frame 300. However, the present invention is not limited thereto, and the force may be inwards force, e.g. a compression, towards the aperture 201 of the mounting plate 200, e.g. towards the center of the mounting plate 200, against a suitable protrusion in the mounting frame 300 (e.g. including a cavity or an angled convex protrusion, or a protrusion positioned near the inner rim of the mounting frame 300, not pictured). In some embodiments, the force is applied radially or substantially radially with respect to the center of the mounting plate 200, which may provide easy installation by turning the frame 300 as will be explained with reference to FIG 11. As mentioned before, the hook 600 includes a portion 601 which projects upwards from the mounting plate 200, but it does not need to be a perfectly vertical projection at 90°. The angle may be higher, the plate portion being bent outwards in direction opposite to the center of the mounting plate 200, which has the effect of increasing the tension of the arm 602 when the dimple 604 snaps against the protrusion 301. Thus, the strength of the fixture can be increased, or alternatively decreased, if the plate portion is bent, reducing the force parallel to the mounting plate 200 which is applied against the protrusion 301. For example, the plate portion may be bent inwards towards the center of the mounting plate 200. For example, an angle between ±20° with respect to the plane of the plate can be used

FIG 4 shows the lateral view from the section A-A of the mounting plate 200. The lateral view of the hook 600 shows that the arm 602 may have at least a portion that runs parallel to the mounting plate 200; the arm 602 may have a sufficient length L so as to provide sufficient flexibility to overcome a protrusion 301 in a mounting frame 300, making it possible to easily engage and disengage, so the mounting frame 300 can be attached manually to the mounting plate 200. If it is too short, it may be too difficult to bend. The length may preferably be between 8mm and 30 mm. In order to provide sufficient strength, but allowing enough length of the arm, the base could have a width W between 1 mm and 5 mm, e.g. of 3 mm at the proximal portion 601. For example, the whole arm 602 of the hook 600 may have a substantially constant width Z, for example 3 mm or less (at the distal portion the width may be slightly different due to the presence of the dimple 604). In general, any other geometry can be used, if it provides enough flexibility and strength to the hook 600.

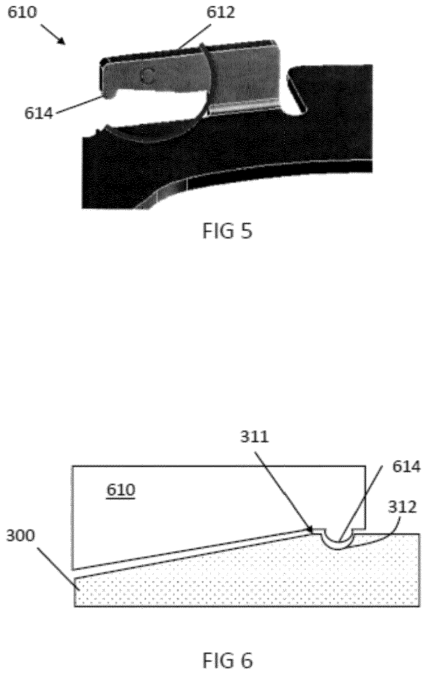

FIG 5 and FIG 6 show another example of hook 610, including an arm 612 formed by a strip parallel to the normal of the mounting plate 200 (as in FIG 3 and FIG 4) in accordance with embodiments of the present invention, and a dimple or tooth 614 at the distal portion of the arm. In this particular example, however, the tooth 614 faces the mounting plate 200. With this design, the elasticity of the arm 612 does not play a very important role, so there is more freedom of design. The arm 612 of the hook 610 still has a supporting function, for holding a mounting frame 300. The hook 610 may present a force against the gravity of the mounting frame 300 when the hook 610 engages with the receiving portion of the frame so the mounting frame 300 is attached to the mounting plate 200, which can be seen as a compression towards the plane of the mounting plate 200. As shown in FIG 6, the tooth 614 fits a cavity 312 in the mounting frame 300 and holds against the ridge 311 provided by the rim of the cavity 312. The arm 612 provides a force in a direction perpendicular to the plane of the mounting plate 200, for example by compression, or simply by holding the mounting frame 300 against the action of gravity. The force provided by the arm 612, combined with the anchoring effect of the tooth 614 against a ridge 311 at the rim of the cavity 310 (the ridge acting as protrusion 301), fixes the mounting plate 610 to the mounting frame 300. This type of hook 610 allows easy assembly and disassembly as in the previous example, and although the design does not need to comply with elasticity requirements (so there is more freedom of design for shape and dimensions), it is preferred if both the ridge 311 and the tooth 614 have similar hardness, in order to avoid damage to the tooth 314 or to the mounting frame 300 when assembling or disassembling. For example, both hook 610 and protrusion may be made of either metal or plastic. For example, a mounting plate 200 made entirely of metal may combine with a mounting frame 300 made of metal or plastic.

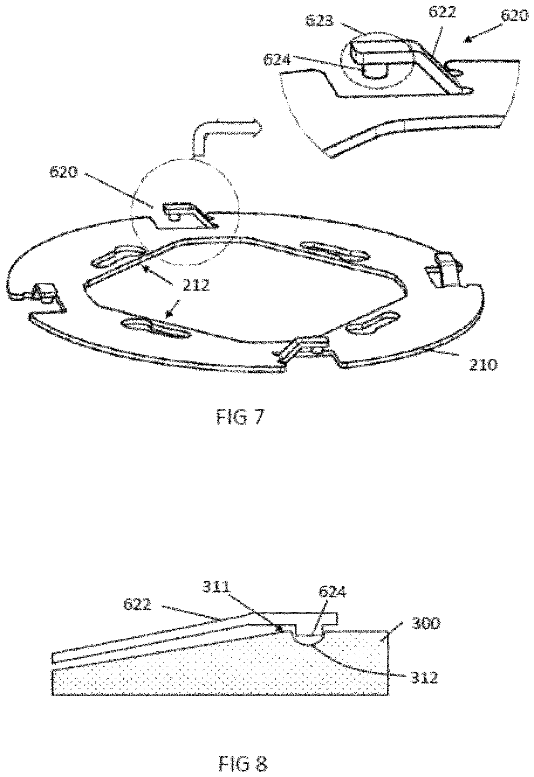

FIG 7 shows another example of a mounting plate 210, comprising only banana-holes as attachment means 212. The clamping hook 620, shown in the zoomed portion, also includes an arm 622 with an angled portion, forming a pleat with a slope: unlike in the hooks of the previous FIG 1 to FIG 6, the arm 622 does not extend vertically from the mounting plate 210. The distal portion 623 of the arm 622 includes a strip, parallel to the mounting plate 210, with a stud 624 facing the plane of the mounting plate 210, and it has similar functionality as the tooth 614 of the example of FIG 5 and FIG 6, as shown in FIG 8. As before, the hook 620, upon engaging with a receiving portion of a mounting frame and abutting the mounting frame 300, may present a force against the gravity of the mounting frame 300 when the mounting frame 300 is attached to the mounting plate 210. The force can be seen as a compression towards the plane of the mounting plate 210.

In particular, FIG 8 shows that the stud 624 can fit a cavity 312 in the mounting frame 300, so the stud 624 holds against a ridge 311 formed by the angle between the mounting frame surface and the cavity 312, however in this example the arm 622 provides spring tension in a direction perpendicular to the plane of the mounting plate 210. The arm 622 including its slope may have a predetermined geometry (e.g. length, inclination and width), providing enough strength to hold the mounting frame 300 and enough flexibility to allow removable attachment by snapping action, similarly to the hook 600 of FIG 3 and FIG 4. The spring tension, combined with the anchoring of the stud 624 in the cavity 312 and against the side wall of the cavity 312 (the functional ridge 311) in the mounting frame 300, fixes the mounting plate 200 to the mounting frame 300.

Instead of a stud 624, a rounded dimple 604, 614 could be used in a Z-pleat, as in the examples of FIG 3 and 4. It could also be formed in the same way as those examples (e.g. by cutting and bending).

A mounting plate may include more than one clamping hook of different types, e.g. a hook including an arm forming a pleat as in FIG 7 and a further hook vertically extending from the mounting plate with a dimple as in FIG 3.

In summary, different hooks can be provided, for easy engagement with a mounting frame 300, manual and easy clamping by sliding a dimple 604, 614, stud 624 or the like over a protrusion 301, 311 or a recess included in the mounting frame 300. The hooks 600, 610, 620 may include a flat arm 602, 612, provided by shaping and cutting the plate 200, which may be vertical with respect to the plane of the mounting plate 200 for providing spring tension with direction parallel to the plane of the plate 200, or for providing a resilient and rigid geometry for counteracting the gravity. Alternatively, the flat arm 622 may include a slope and horizontal portions with respect to the plane of the mounting plate 210, for providing spring tension with direction perpendicular to the plane of the plate 210. Other suitable shapes can be provided. For example, the hook may include an arm with a slit for fitting a protrusion in a mounting frame, e.g. a protrusion 301 formed as a lateral tab as in FIG 3. One of the walls of the slit acts as a dimple for engaging with a protrusion. Alternatively, it may engage with a protrusion provided directly on the base parallel to the plane of the mounting plate 200, e.g. provided by a shaped cavity fitting the shape of the arm with slit on the base of the plate 200.

In some embodiments, the distance between the center of the mounting plate 200 and the hooks 600, 610, 620 may be 39.5 mm. For example, the distance between two diametrically opposite hooks may be 79 mm. This allows clamping with mounting frames which can be used widely, either with a mounting plate, or without plate, directly on the mounting box, in case the mounting box follows a standard different from European, e.g. a Swiss standard.

Preferably, the hooks 600, 610, 620 allow easy assembly and disassembly, without manipulating the hooks 600, 610, 620 themselves, just by adjusting the position of the mounting frame 300 and sliding the frame 300 into the hooks (e.g. through slots in the frame 300) to provide contact between the hooks 600, 610, 620 and the mounting frame 300 (e.g. protrusions 301 in the frame 300).

In a second aspect, the present invention relates to a mounting frame 300, which fits and is adapted to any (or all) of the embodiments of the first aspect of the present invention. For example, the mounting frame 300 includes portions 302 for receiving the hooks 600, 610, 620 of the mounting plate 200, 210, for example cavities, holes, or slots distributed so they can engage with the one or more hooks 600, 610, 620 of a mounting plate 200, 210. The slots may fit the hooks 600, 610, 620, and upon rotation or shifting of the mounting frame 300, may introduce portions of the frame 300 between the arm 602, 612, 622 of each hook 600, 610, 620 and the mounting plate 200, 210. The mounting frame 300 includes engagement portions for engaging with clamping hooks 600, 610, 620. For example, it may include protrusions 301, ridges 311, both, or combinations of different engaging means, thus allowing compatibility with mounting plates 200, 210 with different types of clamping hooks 600, 610, 620.

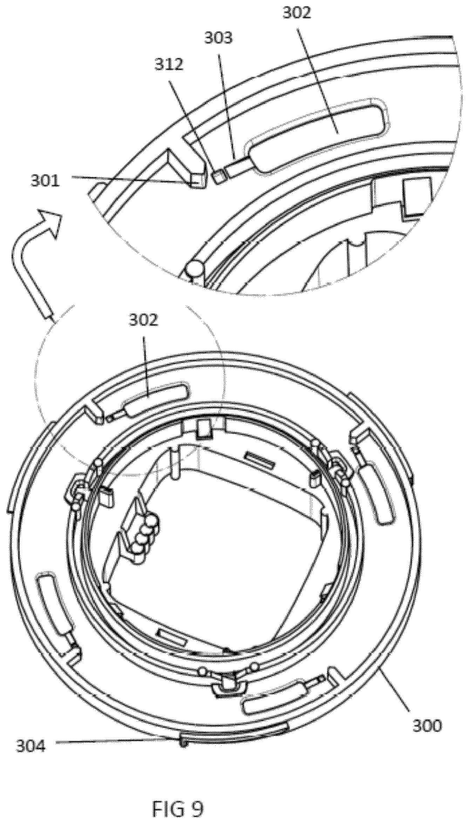

FIG 9 shows a mounting frame 300, which is an integral part of a portion of the housing 105 of an electrical device 100. The present invention is not limiting to this assembly, and the mounting frame 300 may be a separate piece, or attached or attachable to the electrical device 100 itself, or attachable to a housing of the device, which allows modular manufacture.

The mounting frame 300 may include features for receiving hooks 600, 610, 620 of a mounting plate 200, 210 in accordance with embodiments of the present invention. In some embodiments, the mounting frame 300 may include slots 302, cavities, or in general receiving portions for receiving hooks 600, 610, 620 (although any other suitable structure such as separate cavities or loops or the like can be used to receive the hooks 600, 610, 620). The slots 302 may include at one of the rims a slope 303 for smoothly receiving and guiding the arm 602, 612, 622 of the hook 600, 610, 620. For example, the number of slots and their position may coincide with, or at least not be less than, the number and position of hooks 600, 610, 620 on a mounting plate 200, 210 to be attached to the mounting frame 300. For example, the slots 302 may be at a distance of 39.5 mm from the center of the mounting frame 300, or if an even number of symmetrically placed slots 302 are provided, a pair of diametrically opposite slots 302 may be at 79 mm of each other, thus allowing such mounting frame 300 even to be used with some mounting boxes 400 directly with no need of mounting plate 200, 210, but then outside the context of the present invention.

The mounting frame 300 further includes a protrusion 301, for example part of a vertical wall extending radially. In other embodiments (as shown in FIG 10) the protrusion 321 may be a tab extending at an angle with the radius of the mounting frame 310. The choice of the length of the protrusion 301, 311 (how much it protrudes against the hook when engaged), or the choice of the angle and the length of the tab 321, also influence the tension at which the arm 602, 612, 622 of the hook 600, 610, 620 is subjected, providing an accurate tailoring of the strength of the engagement between the hook 600, 610, 620 and the protrusion 301, 311, 321.

The mounting frame 300 may also include a cavity 312 for holding arms 602, 612, 622 of different types, which may include dimples 604, studs 624 or teeth 614, for providing snapping of the hook 600, 610, 620 over the protrusion 301 or ridge 311 of the cavity 312, thereby obtaining an additional holding force between the ridge 311 and the hook 600, 610, 620, preventing it from rotating again without exerting rotational or shifting force high enough to overcome this holding force, as explained with reference to FIG 4 - FIG 8.

In some embodiments, the protrusion 301, 311, 321 is shaped so as to fit any dimple, stud or even groove present along the arm of the hook, and/or for example at least part of the arm 602, 612, 622 of the hook 600, 610, 620, using a correspondingly shaped cavity 312.

The mounting frame 300 may be attachable to a frame cover 103, for example it may include attachment portions 304 for receiving anchoring features of a frame cover 103; alternatively, the mounting frame 300 itself may function as a frame cover 103.

In a third aspect, the present invention provides a mounting system 200, 300; 210, 310, 700 for installing an electrical device 100 to a wall or ceiling; more specifically for installing an electrical device 100 to a mounting box 400 fixed to or embedded into a wall or ceiling.

It includes a mounting frame 300, 310 for holding a device, in accordance with embodiments of the second aspect of the present invention, and a mounting plate 200, 210 in accordance with embodiments of the first aspect of the present invention.

FIG 10 and FIG 11 shows how two portions engage in a system 700 in accordance with some embodiments of the present invention. First, the mounting plate 200, 210 is installed on a surface, such as a wall or a ceiling, with the hooks 600 facing the user, so the user can install the mounting frame 310. As shown in FIG 10, the receiving portions 313 (also slots) of a mounting frame 310 and the hooks 600 of a mounting plate (the mounting plate being hidden by the frame in FIG 10 and FIG 11) are aligned, so the hooks 600 can be inserted in the slots 313 until the plate body contacts the frame body. Then, the mounting frame 310 is rotated manually, e.g. clockwise, as shown in FIG 11. The hooks 600 engage with a tab acting as protrusion 321. This engagement is reversible, and it only requires rotating to the opposite direction, overcoming the engagement force (such as tension of the hook arm) between the hook 600 and the protrusion 321.

A similar engagement can be provided, but the dimples 614, 624 of the hooks 610, 620 would be facing up, and would engage with a cavity 312 of the mounting frame 310.

In some embodiments, the mounting plate 200, 210 may be a metal plate, which allows sufficient resilience of screw holes for screwing to a mounting box 400, even if the aperture 201 of the mounting plate 200, 210 required by the electrical device 100 or device housing 105 is very close to the holes, as explained earlier. The system 200, 300; 210, 310 may further include a mounting frame 300, 310 comprising or made of plastics, which results in an inexpensive and light-weight frame. However, the present invention is not limited to this combination of materials, and both the mounting plate 200, 210 and the mounting frame 300, 310 may be made of metal, or both may be made of plastics, for example. Other materials or combinations thereof may be included, such as a frame or plate including plastic and metal.

An exemplary system may include a PIR sensor housing (with or without the sensor) for a PIR sensor with a 24 m range lens, including a mounting frame made of plastics, and a compatible mounting plate made of metal, which can be attached to a flush box which complies with European standards, the mounting frame being compatible with flush boxes of standards different from the European standard.

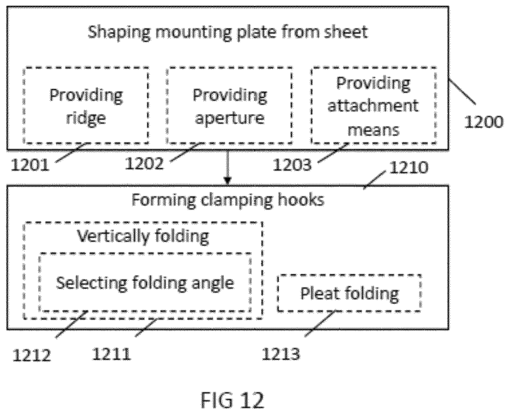

In a fourth aspect, the present invention provides a method of manufacturing a mounting plate 200, 210 in accordance with embodiments of the first aspect. The method, as shown in FIG 12, includes shaping 1200 a mounting plate 200, 210 from a sheet (e.g. a metal or plastics sheet), for example providing a plate with suitable size and shape. This can be done by cutting a sheet by any suitable means, or by punching a sheet with a die, thus shaping the plate.

The method also includes providing 1202 an aperture 201 with size large enough to receive an electrical device 100 or its housing 105, and further providing 1203 apertures (e.g. screw holes, banana-holes and the like) as attachment portions for attaching to a mounting box 400. In preferred embodiments, some or all of these steps are performed simultaneously with shaping the plate 200, 210, for example with a suitable die, e.g. by punching.

The method may also include providing 1201 any of studs 624, teeth 614, dimples 604 or in general ridges on the distal portion 603 of the hook 600, 610 (e.g. of the arm of the hook) for engagement with a protrusion 301, 321 or cavity 312 on a mounting frame 300, 310. In some embodiments, providing a dimple is done simultaneously with shaping 1201 the plate 200, 210. For example, providing the tooth 614 of FIG 5 and FIG 6 may be advantageously easy, just by cutting its shape, with no need to bend the metal plate as the case of the dimple 604 of FIG 3.

The method further comprises forming 1210 at least two clamping hooks 600, 610, 620 on the mounting plate 200, 210. This can be done by folding 1211 a portion of the sheet vertically. This can also be done simultaneously with shaping the plate, e.g. with a suitable mould. In some embodiments of the present invention, this step comprises selecting 1212 the folding angle, for tailoring the clamping strength of the hook. Alternatively, folding may comprise pleat folding 1213, so the fold may be a pleat-like fold, in a z-pleat, rather than vertical folding.

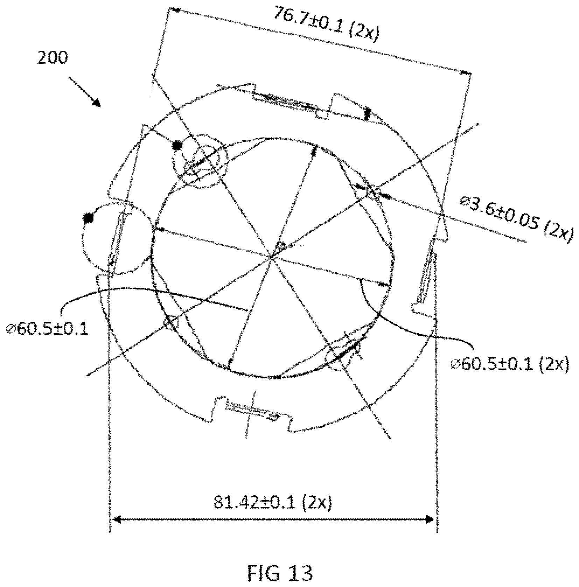

A particular example of a shaped mounting plate 200, including specific dimensions (in millimeters), is illustrated in FIG 13. These dimensions may allow fitting electric devices to European standard mounting boxes, even if the device requires a geometry such that it overlaps its screw holes. However, other sizes and distribution of attachment means can be used in accordance with embodiments of the present invention.

## Claims

1. A mounting system (700) comprising a mounting plate (200, 210) and a mounting frame (300, 310),
the mounting plate (200, 210) comprising
- an aperture (201) for receiving at least part of an electrical device (100),
- attachment means (202, 203, 212) for attaching the mounting plate (200, 210) to a mounting box (400),
- at least one clamping hook (600, 610, 620) with an elongated arm (602, 612, 622) for fixing the position of the mounting frame (300, 310),
the mounting frame (300, 310) comprising at least one receiving portion (302, 313) being adapted to fit the at least one clamping hook (600, 610, 620) of the mounting plate (200, 210),
wherein the elongated arm (602, 612, 622) protrudes from the mounting plate (200, 210) and is connected thereto at a proximal portion (601), so the at least one clamping hook (600, 610, 620) is adapted to engage with the receiving portion (302, 313) of the mounting frame (300, 310) by aligning and inserting the at least one clamping hook (600, 610, 620) into the receiving portion (302, 313) and by rotating or laterally shifting the mounting frame (300, 310) relative to the mounting plate (200, 201),
so the elongated arm (602, 612, 622) slides over and contacts the mounting frame (300, 310), for providing a holding force for holding the mounting frame (300, 310).

2. The mounting system (700) of claim 1, wherein the mounting plate (200, 210) further comprises an external edge (207), wherein the at least one clamping hook (600, 610, 620) is provided on the external edge (207).

3. The mounting system (700) of any one of the previous claims, wherein the mounting plate (200, 210) is made of metal.

4. The mounting system (700) of any one of the previous claims wherein the elongated arm (602, 612, 622) comprises an anchoring feature (604, 614, 624) and the frame comprises an anchorage feature (301, 321), so the anchoring feature (604, 614, 624) of the clamping hook (600, 610, 620) can anchor to the anchorage feature (301, 321) of the mounting frame (300, 310) for fixing the frame to the plate.

5. The mounting system (700) of claim 4, where the elongated arm (602) of the at least one clamping hook (600, 620) is adapted for providing elastic action for providing a holding force for holding the mounting frame (300, 310).

6. The mounting system (700) of claim 5, wherein the anchoring feature (604) of the arm (602) comprises a dimple (604) in a distal portion (603) opposite to the proximal portion (601) of the elongated arm (602), the anchorage feature (301, 321) of the mounting frame (300, 310) further comprising a protrusion (301, 321), the arm (602) and dimple (604) being adapted to provide an elastic force in a direction substantially parallel to the mounting plate (200, 210), for pushing against a protrusion (301, 321) of the mounting frame (300, 310), thereby fixing the position of the mounting frame (300, 310).

7. The mounting system (700) of claim 4 or 5, wherein the anchoring feature of the elongated arm (612, 622) further includes a dimple, stud (624) or tooth (614) in a distal portion (613, 623) opposite to the proximal portion (601) of the elongated arm (612, 622), the anchorage feature (301, 321) of the mounting frame (300, 310) further comprising a protrusion (301, 321), the arm (612, 622) and dimple, stud (624) or tooth (614) being adapted to provide a force towards the mounting plate (200, 210), for clipping into a cavity (312) of the mounting frame (300, 310) thereby fixing the position of the mounting frame (300, 310).

8. The mounting system (700) of any one of the previous claims, wherein the attachment means (202, 212) of the plate (200, 21) comprises a keyhole shaped orifice comprising a hole (204) for fitting the head of a screw, and an extension slot (205) for fitting the body of the screw, the extension slot (205) having a dimension smaller than the hole (204).

9. The mounting system (700) of any one of the previous claims, wherein the plate (200, 210) further comprises at least a further clamping hook (600, 610, 620), wherein the clamping hooks (600, 610, 620) are distributed along the plate at 79 mm of the center of the aperture (201).

10. A method of providing a mounting plate (200, 210) comprising:
- shaping (1200) a plate,
- providing (1202) an aperture (201) through the plate for receiving a housing (105) of an electrical device,
- providing (1203) attachment means (202, 203, 212) for attaching the plate to a mounting box (400),
- forming (1210) at least one clamping hook (600, 610, 620) with elongated arm (602, 612, 622) on the plate
wherein forming (1210) the at least one clamping hook (600, 610, 620) comprises forming the elongated arm (602, 612, 622) protruding from the plate and connected thereto in a proximal portion (601) so the at least one clamping hook (600, 610, 620) can engage with a receiving portion (302) of a mounting frame (300, 310) by aligning and inserting the at least one clamping hook (600, 610, 620) into a receiving portion (302) of the mounting frame, and rotating or laterally shifting the mounting frame (300, 310) so the elongated arm (602, 612, 622) can slide over and contact the mounting frame (300, 310),
wherein forming the elongated arm (612, 622) comprises forming the elongated arm adapted for providing a holding force for holding the mounting frame (300, 310) when the clamping hook (610, 620) engages with the receiving portion (302) of the mounting frame (300, 310).

11. The method of the previous claim, wherein forming the at least one clamping hook (600, 610, 620) comprises folding (1211, 1213) predetermined portions of the shaped plate.

12. The method of the previous claim, wherein shaping (1200) a plate further comprises providing an external edge to the plate, and wherein forming (1210) the at least one clamping hook (600, 610, 620) comprises folding (1211, 1213) predetermined portions of the external edge of the plate

13. The method of any one of claims 10 to 12, further comprising bending (1212) the at least one clamping hook (610, 620) to a predetermined angle with respect to the plate surface.

14. The method of any of claims 10 to 13 wherein shaping (1200) a plate comprises shaping a metal plate.

15. The method of any of claims 10 to 14 further forming a dimple (604), stud (624) or tooth (614) in a distal portion (603, 613, 623) opposite to the proximal portion (601) and being adapted for clipping into a protrusion or ridge (301, 311) of the mounting frame (300, 310) for anchoring and fixing the position of the mounting frame (300, 310) with respect to the mounting plate (200, 210) upon engagement of the clamping hook (610, 620) and the receiving portion of the mounting frame (300, 310).
